# FASCICULE DE BREVET EUROPEEN

(11) **EP 3 623 101 B1**
(45) Date de publication et mention de la délivrance du brevet: **28.10.2020**
(21) Numéro de dépôt: 19179892.5
(22) Date de dépôt: 13.06.2019
(51) Int. Cl.: B23P 19/10, B25B 27/16, B64F 5/10

(54) **OUTIL DE CENTRAGE D'ALÉSAGES ET PROCÉDÉ DE CENTRAGE DES ALÉSAGES D'UNE ATTACHE-MOTEUR D'UN AÉRONEF UTILISANT UN OUTIL DE CENTRAGE**
ZENTRIERWERKZEUG FÜR BOHRUNGEN UND ZENTRIERVERFAHREN FÜR BOHRUNGEN EINER MOTORBEFESTIGUNG EINES LUFTFAHRZEUGS, DIE EIN SOLCHES ZENTRIERWERKZEUG VERWENDET
BORE CENTERING TOOL AND METHOD FOR CENTERING BORES OF AN AIRCRAFT ENGINE ATTACHMENT USING A CENTERING TOOL

(30) Priorité: 14.09.2018 FR 1858284
(43) Date de publication de la demande: 18.03.2020
(73) Titulaire: AIRBUS OPERATIONS (S.A.S.), 31060 Toulouse (FR)
(72) Inventeur: MARTINEZ, Pascal, 31060 TOULOUSE Cedex 9 (FR)
(74) Mandataire: Gicquel, Olivier Yves Gérard

(56) Documents cités:
- EP-A1- 3 235 590
- FR-A1- 2 891 245
- FR-A1- 3 046 137
- US-A- 5 074 536
- US-A1- 2009 039 198

## Description

La présente demande se rapporte à un outil de centrage d'alésages selon le préambule de la revendication 1 ainsi qu'à un procédé de centrage des alésages d'une attache-moteur d'un aéronef utilisant ledit outil de centrage.

Un tel outil et un tel procédé sont décrits dans le document FR-2.891.245.

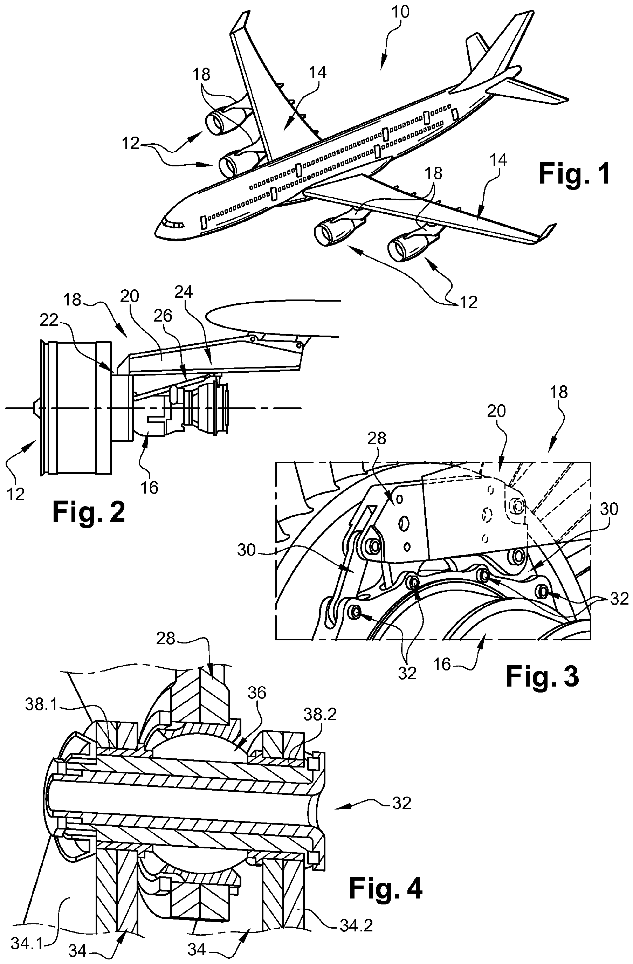

Selon une configuration visible sur les figures 1 et 2, un aéronef 10 comprend plusieurs ensembles moteurs 12 qui sont positionnés sous la voilure 14 de l'aéronef 10. Un ensemble moteur 12 comprend un moteur 16, une nacelle (non représentée sur la figure 2) positionnée autour du moteur 16 et un mât 18 qui assure la liaison entre le moteur 16 et le reste de l'aéronef 10, notamment la voilure 14. Le mât 18 comprend une structure primaire 20 qui est reliée au moteur 16 par une attache-moteur avant 22, une attache-moteur arrière 24 et un couple de bielles de poussée 26 qui assurent la reprise des efforts de poussée.

Comme illustré sur la figure 3, l'attache-moteur avant 22 comprend une platine de fixation 28 intercalée entre la structure primaire 20 du mât 18 et le moteur 16. Cette platine de fixation 28 est solidarisée à la structure primaire 20 du mât et reliée au moteur, directement ou par l'intermédiaire de biellettes 30, par des axes de liaison 32. Pour chacun d'eux, le moteur 16 comprend une chape 34 présentant deux branches 34.1, 34.2 entre lesquelles est positionnée une partie de la platine de fixation 28.

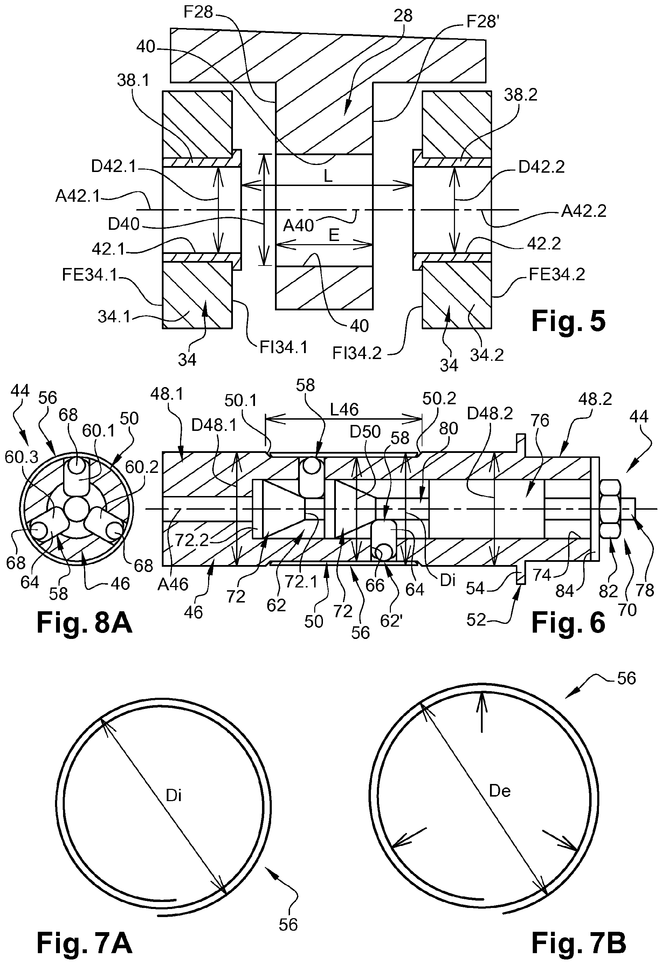

Selon un mode de réalisation visible sur la figure 4, l'axe de liaison 32 supporte en partie centrale une rotule 36, intercalée entre l'axe de liaison 32 et la platine de fixation 28, et deux paliers lisses 38.1, 38.2, disposés de part et d'autre de la rotule 36, intercalés entre l'axe de liaison 32 et les branches 34.1, 34.2 de la chape 34. La platine de fixation 28 comprend un alésage 40 pour loger la rotule 36 et chaque palier lisse 38.1, 38.2 comprend un alésage 42.1 et 42.1 pour loger l'axe de liaison 32, comme illustré sur la figure 5. L'alésage 40 a un diamètre supérieur à celui des alésages 42.1, 42.2 des paliers lisses 38.1, 38.2 solidaires des branches 34.1, 34.2 de la chape 34. Pour pouvoir monter l'axe de liaison 32, l'alésage 40 de la platine de fixation 28 et les alésages 42.1, 42.2 des paliers lisses 38.1, 38.2 doivent être sensiblement coaxiaux.

Lors du montage du moteur 16, le moteur 16 est pré-positionné par rapport au mât 18 en utilisant par exemple un chariot tel que décrit dans le document US-6.292.999. Lors de ce prépositionnement, les axes de l'alésage 40 de la platine de fixation 28 et des alésages 42.1, 42.2 des paliers lisses 38.1, 38.2 sont approximativement alignés à +/- 2 mm.

Un outil de centrage est utilisé pour centrer l'alésage 40 de la platine de fixation 28 et les alésages 42.1, 42.2 des paliers lisses 38.1, 38.2 de manière à rendre les axes de l'alésage 40 de la platine de fixation 28 et des alésages 42.1, 42.2 des paliers lisses 38.1, 38.2 coaxiaux.

Selon un premier mode de réalisation décrit dans le document FR-2.891.245, un outil de centrage comprend un axe qui présente un diamètre fixe sensiblement égal à ceux des alésages à centrer et une extrémité sphérique. Un tel outil ne peut pas être utilisé si les diamètres des alésages à centrer ne sont pas égaux.

Selon un deuxième mode de réalisation, un outil de centrage comprend un axe expansible qui présente une bague fendue, un mécanisme d'expansion radiale positionné à l'intérieur de la bague fendue et configuré pour occuper un état rétracté et un état expansé ainsi qu'une commande pour provoquer le changement d'état du mécanisme d'expansion radiale. La bague fendue a une longueur telle qu'elle est logée simultanément dans tous les alésages à centrer. A l'état rétracté, la bague fendue doit avoir un diamètre externe inférieur à celui des alésages à centrer pour pouvoir être introduite dans les alésages à centrer non encore coaxiaux. Selon un mode opératoire, l'axe expansible est positionné dans les alésages à centrer, la bague fendue étant logée dans tous les alésages à centrer et le mécanisme d'expansion radiale étant à l'état rétracté. Progressivement, le mécanisme d'expansion passe de l'état rétracté à l'état expansé provoquant l'expansion de la bague fendue jusqu'à ce que son diamètre externe soit égal à celui des alésages à centrer qui sont alors coaxiaux. Comme précédemment, un axe expansible ne peut pas être utilisé si les diamètres des alésages à centrer ne sont pas égaux.

La présente invention vise à remédier à tout ou partie des inconvénients de l'art antérieur.

A cet effet, l'invention a pour objet un outil de centrage d'au moins un alésage tel que revendiqué dans la revendication 1.

Cet outil de centrage permet de pouvoir centrer aux moins deux alésages avec des diamètres différents. Par rapport à une bague fendue, un ressort à spirales permet d'obtenir une expansion radiale concentrique sur une plage d'expansion (différence entre les diamètres extérieurs initial Di et expansé De) importante, supérieure à 2 mm. De plus, le ressort à spirales permet de conserver un contact sur toute la périphérie du troisième alésage à l'état expansé ce qui contribue à obtenir un centrage plus précis.

D'autres caractéristiques et avantages ressortiront de la description de l'invention qui va suivre, description donnée à titre d'exemple uniquement, en regard des dessins annexés parmi lesquels :
- la figure 1 est une vue en perspective d'un aéronef,
- la figure 2 est une représentation schématique de côté d'un ensemble propulsif sans nacelle relié à une voilure qui illustre un mode de réalisation,
- la figure 3 est une vue en perspective d'une attache-moteur avant qui illustre un mode de réalisation,
- la figure 4 est une coupe longitudinale d'un axe de liaison de l'attache-moteur avant visible sur la figure 3,
- la figure 5 est une coupe longitudinale des alésages à centrer d'une attache-moteur qui illustre un mode de réalisation de l'invention,
- la figure 6 est une coupe longitudinale d'un outil de centrage qui illustre un mode de réalisation de l'invention,
- les figures 7A et 7B sont des coupes transversales d'un ressort en spirale d'un outil de centrage respectivement à l'état repos et à l'état expansé qui illustrent un mode de réalisation de l'invention,
- les figures 8A et 8B sont des coupes transversales de l'outil de centrage visible sur la figure 6 respectivement à l'état rétracté et à l'état expansé, et
- les figures 9A et 9B sont des coupes longitudinales des alésages à centrer visibles sur la figure 5 dans lesquels est positionné l'outil de centrage visible sur la figure 6 respectivement à l'état rétracté et à l'état expansé.

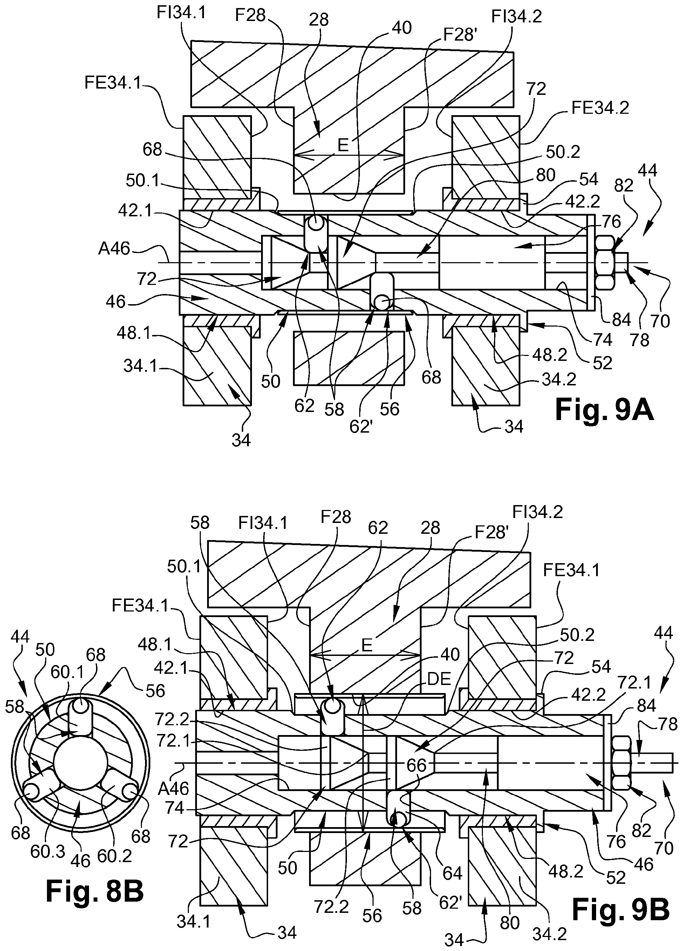

Sur les figures 5, 9A et 9B, on a représenté une partie d'une attache-moteur avant, reliant un moteur 16 et un mât 18 d'un aéronef, qui comprend une chape 34 solidaire du moteur 16 présentant des première et deuxième branches 34.1, 34.2 ainsi qu'une platine de fixation 28 solidaire d'une structure primaire 20 du mât 18 dont une partie est interposée entre les première et deuxième branches 34.1, 34.2 de la chape 34.

Les première et deuxième branches 34.1, 34.2 présentent des faces intérieures FI34.1, FI34.2 orientées l'une vers l'autre et des faces extérieures FE34.1 et FE34.2. Selon une configuration, pour chacune des première et deuxième branches 34.1, 34.2, les faces intérieure FI34.1, FI34.2 et extérieure FE34.1, FE34.2 sont parallèles. Les faces intérieures FI34.1 et FI34.2 des première et deuxième branches sont parallèles et séparées d'une distance interbranche L. La première branche 34.1 comprend un premier alésage 42.1 qui relie les faces intérieure FI34.1 et extérieure FE34.1 de la première branche 34.1. La deuxième branche 34.1 comprend un deuxième alésage 42.2 qui relie les faces intérieure FI34.2 et extérieure FE34.2 de la deuxième branche 34.2. Selon les modes de réalisation, les premier et deuxième alésages 42.1, 42.2 sont réalisés directement dans les première et deuxième branches 34.1, 34.2 de la chape 34 ou correspondent aux alésages intérieurs de premier et deuxième paliers lisses 38.1, 38.2 montés dans des alésages prévus dans les premier et deuxième branches 34.1, 34.2 de la chape 34. Pour simplifier la description, on considère par la suite que les paliers lisses et les branches ne forment qu'une unique pièce.

La partie de la platine de fixation 28 intercalée entre les première et deuxième branches 34.1, 34.2 présente des première et deuxième faces F28, F28' ainsi qu'un troisième alésage 40 reliant les première et deuxième faces F28, F28'. Selon une configuration, les première et deuxième faces F28, F28' sont parallèles autour du troisième alésage 40 et séparées d'une distance, appelée également épaisseur E, inférieure ou égale à la distance interbranche L.

Les premier et deuxième alésages 42.1, 42.2 des première et deuxième branches 34.1, 34.2 de la chape 34 présentent des premier et deuxième axes A42.1, A42.2 approximativement coaxiaux et des diamètres intérieurs D42.1, D42.2 approximativement égaux. En variante, les premier et deuxième alésages 42.1, 42.2 pourraient avoir des diamètres intérieurs D42.1, D42.2 différents.

Le troisième alésage 40 de la platine de fixation 28 a un diamètre D40 supérieur à ceux des premier et deuxième alésages 42.1, 42.2 des première et deuxième branches 34.1, 34.2 de la chape 34 et présente un troisième axe A40 qui doit être coaxial à ceux des premier et deuxième alésages 42.1, 42.2 des première et deuxième branches 34.1, 34.2 de la chape 34 pour permettre le montage d'un axe de liaison.

Sur les figures 6, 8A, 8B, 9A et 9B, on a représenté un outil de centrage 44 configuré pour se loger dans les premier, deuxième et troisième alésages 42.1, 42.2, 40 afin de les centrer de sorte que le troisième axe A40 du troisième alésage 40 soit coaxial aux premier et deuxième axes A42.1, A42.2 des premier et deuxième alésages 42.1, 42.2 des première et deuxième branches 34.1, 34.2 de la chape 34.

Cet outil de centrage 44 comprend un corps 46 cylindrique creux qui présente un axe A46, une première et deuxième portées 48.1, 48.2 coaxiales ainsi qu'un tronçon 50 cylindrique, reliant les première et deuxième portées 48.1, 48.2, coaxial aux première et deuxième portées 48.1, 48.2.

Pour la suite de la description, une direction longitudinale est une direction parallèle à l'axe A46 du corps 46 de l'outil de centrage 44. Un plan longitudinal contient l'axe A46. Une direction radiale est une direction perpendiculaire à l'axe A46 et un plan transversal est un plan perpendiculaire à l'axe A46. Une longueur correspond à une dimension prise selon la direction longitudinale.

Les première et deuxième portées 48.1 et 48.2 sont cylindriques et ont des diamètres extérieurs D48.1, D48.2 égaux respectivement aux diamètres intérieurs D42.1, D42.2 des premier et deuxième alésages 42.1, 42.2 des première et deuxième branches 34.1, 34.2 de la chape 34. Selon une configuration, lorsque les diamètres intérieurs D42.1, D42.2 des premier et deuxième alésages 42.1, 42.2 des première et deuxième branches 34.1, 34.2 de la chape 34 sont égaux alors les diamètres extérieurs D48.1, D48.2 des première et deuxième portées 48.1, 48.2 sont égaux.

Les première et deuxième portées 48.1, 48.2 sont séparées d'une distance L46 supérieure à l'épaisseur E de la platine de fixation 28. Les première et deuxième portées 48.1, 48.2 sont séparées d'une distance et ont des longueurs telles que lorsque l'outil de centrage 44 est positionné dans une position insérée dans les premier, deuxième et troisième alésages 40, 42.1, 42.2, les première et deuxième portées 48.1, 48.2 coopèrent avec les premier et deuxième alésages 42.1, 42.2 de sorte que les première et deuxième portées 48.1, 48.2 soient coaxiales aux premier et deuxième alésages 42.1, 42.2. Selon une configuration, la première portée 48.1 a une longueur supérieure ou égale à la longueur du premier alésage 42.1 et la deuxième portée 48.2 a une longueur supérieure ou égale à la longueur du deuxième alésage 42.2. Les première et deuxième portées 48.1, 48.2 sont séparées d'une distance inférieure à la distance interbranche L.

Selon une autre caractéristique, l'outil de centrage 44 comprend une butée 52 pour l'immobiliser en translation, selon une direction parallèle à l'axe A46 du corps 46, dans la position insérée. Selon un mode de réalisation, le corps 46 présente une collerette 54, positionnée par exemple au niveau de l'une des première et deuxième portées 48.1, 48.2, qui a un diamètre supérieur au diamètre extérieur D48.1, D48.2 de la première ou deuxième portée 48.1, 48.2 au niveau de laquelle elle est rapportée. Ainsi, cette collerette 54 assure la fonction de butée 52 pour immobiliser en translation l'outil de centrage 44. En fonctionnement, la collerette 54 est en appui contre la face extérieure FE34.1, FE34.2 de l'une des première et deuxième branches 34.1, 34.2 pour immobiliser le corps 46 dans la position insérée.

Selon une autre caractéristique, l'outil de centrage 44 comprend au moins un ressort à spirales 56, entourant le tronçon 50 entre les première et deuxième portées 48.1, 48.2, configuré pour coopérer avec le troisième alésage 40 de la platine de fixation 28 en fonctionnement. Le ressort à spirales 56 est configuré pour occuper un état repos, non expansé, visible sur les figures 7A, 8A et 9A dans lequel il présente un diamètre extérieur initial Di, et un état expansé, visible sur les figures 7B, 8B et 9B dans lequel il présente un diamètre extérieur expansé De. Le ressort à spirales 56 présente :
- un diamètre extérieur initial Di inférieur au moins au plus grand des diamètres intérieurs D42.1, D42.2 des premier et deuxième alésages 42.1, 42.2 des première et deuxième branches 34.1, 34.2 de la chape 34 de manière à permettre l'insertion de l'outil de centrage 44 dans les alésages à centrer dans la position insérée,
- un diamètre extérieur expansé De supérieur au diamètre intérieur D40 du troisième alésage 40, et
- une longueur inférieure à la distance interbranche L.

Par rapport à une bague fendue, un ressort à spirales 56 permet d'obtenir une expansion radiale concentrique sur une plage d'expansion (différence entre les diamètres extérieurs initial Di et expansé De) importante, supérieure à 2 mm. De plus, le ressort à spirales 56 permet de conserver un contact sur toute la périphérie du troisième alésage 40 à l'état expansé ce qui contribue à obtenir un centrage plus précis.

Selon une configuration, le tronçon 50 présente un diamètre extérieur D50 inférieur aux diamètres extérieurs D48.1, D48.2 des première et deuxième portées 48.1, 48.2. Ce tronçon 50 est délimité à chacune de ses extrémités par des épaulements 50.1 et 50.2. Le ressort à spirales 56 a un diamètre intérieur inférieur aux diamètres extérieurs D48.1, D48.2 des première et deuxième portées et une longueur sensiblement égale au tronçon 50 de manière à ce que le ressort à spirales 56 soit immobilisé en translation selon une direction longitudinale par rapport au corps 46 grâce aux épaulements 50.1, 50.2. Quelle que soit la configuration, le corps 46 est configuré pour immobiliser le ressort à spirales en translation selon la direction longitudinale.

Le diamètre intérieur du ressort à spirales 56 à l'état repos est sensiblement égal au diamètre extérieur du tronçon 50 de sorte que le ressort à spirales 56 soit coaxial au tronçon 50 qui est lui-même coaxial aux première et deuxième portées 48.1, 48.2.

Selon un mode de réalisation, le ressort à spirales 56 présente au moins une spirale qui est jointive à l'état repos.

Selon une autre caractéristique, l'outil de centrage 44 comprend un mécanisme d'expansion radiale 58, positionné dans le corps 46, configuré pour occuper un état inactif dans lequel il n'agit pas sur le ressort à spirales 56 qui reste à l'état repos, comme illustré sur les figures 8A et 9A, et un état activé dans lequel il agit sur le ressort à spirales 56 et provoque une augmentation de diamètre (expansion radiale) du ressort à spirales 56.

Le mécanisme d'expansion radiale 58 est configuré pour conserver le ressort à spirales 56 coaxial au corps 46 de l'outil de centrage 44. Le mécanisme d'expansion radiale 58 et/ou le ressort à spirales 56 sont configurés pour obtenir une expansion radiale du ressort à spirales 56 sensiblement identique sur toute sa longueur.

Selon une configuration, pour conserver le ressort à spirales 56 coaxial au corps 46 de l'outil de centrage 44, le mécanisme d'expansion radiale 58 comprend au moins trois éléments mobiles radialement 60.1, 60.2, 60.3 par rapport au corps 46 entre une position rétractée, visible sur les figures 6, 8A et 9A, et une position plus ou moins sortie, visible sur les figures 8B et 9B, répartis de manière sensiblement homogène sur la périphérie du corps 46.

Selon un mode de réalisation, le mécanisme d'expansion radiale 58 comprend trois éléments mobiles radialement 60.1, 60.2, 60.3 selon des directions radiales formant, dans un plan transversal, entre elles des angles de l'ordre de 120°.

Selon un mode de réalisation non illustré, pour obtenir une expansion radiale du ressort à spirales 56 sensiblement identique sur toute sa longueur, chaque élément mobiles radialement 60.1, 60.2, 60.3 a une forme oblongue qui s'étend sur quasiment toute la longueur du ressort à spirales 56.

Selon un autre mode de réalisation visible sur les figures 6, 8A et 8B, le mécanisme d'expansion radiale 58 comprend plusieurs séries 62, 62' d'au moins trois éléments mobiles radialement 60.1, 60.2, 60.3 pour chaque série 62, 62', les trois éléments mobiles radialement 60.1, 60.2, 60.3 étant disposés dans un même plan transversal. Les séries 62, 62' sont réparties sur la longueur du ressort à spirales 56. Selon une configuration, le mécanisme d'expansion radiale 58 comprend deux séries 62, 62', la première série 62 étant positionnée de manière à coopérer avec le ressort à spirales 56 à une distance d'une première extrémité du ressort à spirales 56 d'environ un quart de la longueur du ressort à spirales 56, la deuxième série 62' étant positionnée de manière à coopérer avec le ressort à spirales 56 à une distance d'une deuxième extrémité du ressort à spirales 56 d'environ un quart de la longueur du ressort à spirales 56.

Selon le mode de réalisation visible sur les figures 6, 8A et 8B, chaque élément mobile radialement 60.1, 60.2, 60.3 est une tige cylindrique 64. Pour chacune d'elles, le corps 46 comprend un conduit 66 avec une section sensiblement égale à celle de la tige cylindrique 64 pour permettre à cette dernière de coulisser. Les conduits 66 sont répartis sur le corps 46 de manière à obtenir deux séries 62, 62' d'éléments mobiles radialement 60.1, 60.2, 60.3. Pour chaque série 62, 62', les conduits 66 ont des axes radiaux formant entre eux des angles de l'ordre de 120°. Le corps 46 et les éléments mobiles radialement 60.1, 60.2, 60.3 sont dimensionnés de manière à ce que les éléments mobiles radialement 60.1, 60.2, 60.3 ne soient pas en saillie par rapport au tronçon 50 lorsque le ressort à spirales 56 est à l'état repos (non expansé) et qu'ils soient toujours partiellement guidés par les conduits 66 lorsque le ressort à spirales 56 est à l'état expansé.

Selon une autre caractéristique, le ressort à spirales 56 et/ou le mécanisme d'expansion radiale 58 sont configurés pour réduire la friction entre eux afin de ne pas perturber l'expansion radiale du ressort à spirales 56 de manière concentrique. Selon un mode de réalisation, chaque élément mobile radialement 60.1, 60.2, 60.3 comprend au moins une butée à bille 68 à une de ses extrémités en contact avec le ressort à spirales 56.

Selon une autre caractéristique, l'outil de centrage 44 comprend une commande 70 pour contrôler le changement d'état du mécanisme d'expansion radiale 58 afin de maîtriser l'expansion radiale du ressort à spirales 56. Cette commande 70, positionnée à l'intérieur du corps 46, est mobile entre une première position dans laquelle elle n'agit pas sur le mécanisme d'expansion radiale 58 et une deuxième position dans laquelle elle provoque un passage du mécanisme d'expansion radiale 58 à l'état activé. Selon un mode de réalisation, la commande 70 comprend au moins une came 72 configurée pour coopérer avec les éléments mobiles radialement 60.1, 60.2, 60.3 du mécanisme d'expansion radiale 58.

Selon un mode de réalisation, le corps 46 comprend une chambre cylindrique 74, coaxiale aux première et deuxième portées 48.1, 48.2 et au tronçon 50, dans laquelle débouchent les conduits 66 prévus pour les éléments mobiles radialement 60.1, 60.2, 60.3. En complément, la commande 70 comprend un piston 76 coulissant dans la chambre 74 de manière à se déplacer selon une direction longitudinale, ledit piston 76 étant prolongé, à une première extrémité, par une première tige 78 au moins partiellement filetée et en saillie à l'extérieur du corps 46 et, à une deuxième extrémité, par une deuxième tige 80 à laquelle est reliée chaque came 72.

En complément, la commande 70 comprend un écrou 82, vissé sur la première tige 78, qui traverse une plaque 84 solidaire du corps 46 et fermant la chambre 74. En fonctionnement, l'écrou 82 est en appui contre la plaque 84, la rotation dans un premier sens de rotation de l'écrou 82 par rapport à la première tige 78 provoquant un déplacement de la commande 70 selon la direction longitudinale de la première position vers la deuxième position. Un élément de rappel tend à maintenir la commande dans la première position. Grâce à son élasticité, le ressort à spirales 56 assure la fonction d'élément de rappel.

La commande 70 comprend autant de cames 72 que de séries 62, 62' d'éléments mobiles radialement 60.1, 60.2, 60.3. Selon une configuration, chaque came 72 est tronconique et s'étend entre une petite section 72.1 et une grande section 72.2 positionnées dans des plans transversaux. En présence de plusieurs cames 72, elles sont toutes identiques et positionnées le long de la deuxième tige 80 de sorte que les éléments mobiles radialement 60.1, 60.2, 60.3 soient tous simultanément en contact avec la deuxième tige 80 ou avec les petites sections 72.1 des cames 72, dans la première position de la commande 70, lorsque le mécanisme d'expansion radiale 58 est à l'état inactif et que le ressort à spirales 56 est à l'état repos ; ou avec les grandes sections 72.2 des cames 72, dans la deuxième position de la commande 70, lorsque le mécanisme d'expansion radiale 58 est à l'état actif et que le ressort à spirales 56 est à l'état expansé.

Ainsi, il est possible d'ajuster le diamètre extérieur du ressort à spirales 56 en vissant plus ou moins l'écrou 82.

Bien entendu, l'invention n'est pas limitée à ce mode de réalisation pour la commande 70. D'autres solutions pourraient être envisagées pour provoquer le déplacement radial des éléments mobiles radialement 60.1, 60.2, 60.3 et moduler l'expansion radiale du ressort à spirales 56.

Un procédé de centrage des alésages d'une attache-moteur d'un aéronef utilisant l'outil de centrage 44 est décrit au regard des figures 9A et 9B.

Dans un premier temps, le troisième alésage 40 est positionné approximativement par rapport aux premier et deuxième alésages 42.1 et 42.2 et n'est pas coaxial à ces derniers. Cependant, les premier, deuxième et troisième alésages 40, 42.1, 42.2 sont positionnés de manière à permettre l'insertion de l'outil de centrage 44, le ressort à spirales 56 étant à l'état repos, le mécanisme d'expansion radiale 58 étant à l'état inactif et la commande 70 étant décalée vers la gauche dans la première position, comme illustré sur la figure 9A.

Le procédé de centrage comprend une première étape d'insertion de l'outil de centrage 44 dans les premier, deuxième et troisième alésages 40, 42.1, 42.2 jusqu'à atteindre la position insérée, la collerette 54 étant en appui contre la face extérieure FE34.2 de la deuxième branche 34.2. Dès lors les première et deuxième portées 48.1, 48.2 de l'outil de centrage 44 sont positionnés dans les premier et deuxième alésages 42.1, 42.2 des première et deuxième branches 34.1, 34.2 de la chape 34 et le corps 46 de l'outil de centrage 44 est coaxial aux premier et deuxième alésages 42.1, 42.2. Le ressort à spirales 56 est écarté du troisième alésage 40.

Le procédé de centrage comprend une deuxième étape d'activation du mécanisme d'expansion radiale 58 en faisant pivoter l'écrou 82 par rapport à la première tige 78 dans le premier sens de rotation. La commande 70 se translate vers la deuxième position provoquant la sortie des éléments mobiles radialement 60.1, 60.2, 60.3 et l'expansion radiale du ressort à spirales 56. Cette opération de vissage (ou dévissage en fonction du pas de vis) de l'écrou 82 est réalisée jusqu'à ce que le ressort à spirales 56 soit en contact avec le troisième alésage 40 sur toute la périphérie du troisième alésage 40 et ne puisse plus s'expanser, comme illustré sur la figure 9A. Dès lors, le troisième alésage 40 est coaxial aux premier et deuxième alésages 42.1, 42.2. La chape 34 et la partie de platine de fixation 28 sont maintenues dans cette position par tout moyen approprié. L'outil de centrage 44 est alors retiré des premier, deuxième et troisième alésages 40, 42.1, 42.2 en ayant au préalablement fait pivoter l'écrou 82 par rapport à la première tige 78 selon le deuxième sens de rotation. En raison de son élasticité, le ressort à spirales 56 revient automatiquement à l'état repos (non expansé) et provoque le déplacement des éléments mobiles radialement 60.1, 60.2, 60.3 en position rétractée ainsi que le déplacement de la commande 70 vers la première position. Un axe de fixation 32 peut alors être mis en place dans les premier, deuxième et troisième alésages 40, 42.1, 42.2 pour relier la chape 34 solidaire du moteur 16 et la platine de fixation 28 solidaire du mât 18.

Bien entendu, l'invention n'est pas limitée au centrage des alésages d'une attache-moteur avant. Elle peut être utilisée pour centrer au moins un alésage à centrer d'une première pièce, solidaire d'un moteur 16 (ou respectivement d'un mât 18) d'un aéronef, par rapport à des premier et deuxième alésages 42.1, 42.2 de première et deuxième branches 34.1, 34.2 d'une chape 34 d'une deuxième pièce, solidaire du mât 18 (ou respectivement du moteur 16) de l'aéronef, disposés de part et d'autre de l'alésage à centrer.

En variante, l'outil de centrage 44 peut être utilisé pour centrer au moins un alésage à centrer par rapport à un premier alésage. Dans ce cas, l'outil de centrage 44 peut ne comprendre qu'une seule portée prévue pour se loger dans le premier alésage, le ressort à spirales 56 étant positionné dans l'alésage à centrer.

## Revendications

1. Outil de centrage d'au moins un alésage à centrer (40) présentant un diamètre intérieur (D40) par rapport à au moins un premier alésage (42.1) présentant un diamètre intérieur (D42.1), l'outil de centrage comprenant un corps (46) présentant au moins une première portée (48.1) configurée pour être coaxiale au premier alésage (42.1) lorsque ladite première portée (48.1) est positionnée dans le premier alésage (42.1) et un tronçon (50) configuré pour être positionné dans l'alésage à centrer (40), **caractérisé en ce que** l'outil de centrage comprend :
- un ressort à spirales (56), positionné autour du tronçon (50), configuré pour occuper un état repos, non expansé, dans lequel il présente un diamètre extérieur initial (Di) et un état expansé dans lequel il présente un diamètre extérieur expansé (De) supérieur au diamètre intérieur (D40) de l'alésage à centrer,
- un mécanisme d'expansion radiale (58) configuré pour occuper un état inactif dans lequel il n'agit pas sur le ressort à spirales (56) et un état activé dans lequel il provoque une augmentation de diamètre du ressort à spirales (56),
- le mécanisme d'expansion radiale (58) étant configuré pour conserver le ressort à spirales (56) coaxial au corps (46) à l'état expansé, et
- le mécanisme d'expansion radiale (58) et/ou le ressort à spirales (56) étant configurés pour obtenir une expansion radiale du ressort à spirales (56) sensiblement identique sur toute sa longueur.

2. Outil de centrage selon la revendication 1, **caractérisé en ce que** le mécanisme d'expansion radiale (58) comprend au moins trois éléments mobiles radialement (60.1, 60.2, 60.3) par rapport au corps (46), entre une position rétractée et une position plus ou moins sortie, répartis de manière sensiblement homogène sur la périphérie du corps (46).

3. Outil de centrage selon la revendication 1 ou 2, **caractérisé en ce que** le mécanisme d'expansion radiale (58) comprend plusieurs séries (62, 62') d'au moins trois éléments mobiles radialement (60.1, 60.2, 60.3) pour chaque série (62, 62'), les trois éléments mobiles radialement (60.1, 60.2, 60.3) étant disposés dans un même plan transversal, les séries (62, 62') étant réparties sur la longueur du ressort à spirales (56).

4. Outil de centrage selon l'une des revendications précédentes, **caractérisé en ce que** le ressort à spirales (56) et/ou le mécanisme d'expansion radiale (58) sont configurés pour réduire la friction entre eux.

5. Outil de centrage selon la revendication précédente, **caractérisé en ce que** le mécanisme d'expansion radiale (58) comprend des éléments mobiles radialement (60.1, 60.2, 60.3) qui comportent chacun au moins une butée à bille (68) à une de leurs extrémités en contact avec le ressort à spirales (56).

6. Outil de centrage selon l'une des revendications précédentes, **caractérisé en ce que** l'outil de centrage comprend une commande (70) pour contrôler un changement d'état du mécanisme d'expansion radiale (58), positionnée à l'intérieur du corps (46), mobile selon une direction longitudinale entre une première position dans laquelle la commande (70) n'agit pas sur le mécanisme d'expansion radiale (58) et une deuxième position dans laquelle la commande (70) provoque un passage du mécanisme d'expansion radiale (58) à l'état activé.

7. Outil de centrage selon la revendication précédente, **caractérisé en ce que** la commande (70) comprend au moins une came (72) configurée pour coopérer avec des éléments mobiles radialement (60.1, 60.2, 60.3) du mécanisme d'expansion radiale (58), une première tige (78) au moins partiellement filetée et un écrou (82) vissé sur la première tige (78) de sorte qu'une rotation dans un premier sens de rotation de l'écrou (82) par rapport à la première tige (78) provoque un déplacement de la commande (70) de la première position vers la deuxième position.

8. Outil de centrage selon l'une des revendications précédentes, **caractérisé en ce que** le corps (46) comprend une butée (52) pour l'immobiliser en translation par rapport aux alésages, selon une direction longitudinale, dans une position insérée.

9. Outil de centrage selon l'une des revendications précédentes, **caractérisé en ce que** l'outil de centrage comprend deux portées (48.1, 48.2) disposées de part et d'autre du tronçon (50).

10. Procédé de centrage des alésages (42.1, 42.2, 40) d'une attache-moteur d'un aéronef utilisant un outil de centrage (44) selon l'une des revendications précédentes, **caractérisé en ce que** le procédé comprend :
- Une étape d'insertion de l'outil de centrage (44) dans les alésages (42.1, 42.2, 40) jusqu'à atteindre une position insérée, le ressort à spirales (56) étant à l'état repos positionné dans un alésage à centrer (40) et le mécanisme d'expansion radiale (58) à l'état inactif,
- Une étape d'activation du mécanisme d'expansion radiale (58) jusqu'à ce que le ressort à spirales (56) soit en contact avec l'alésage à centrer (40) sur toute sa périphérie et ne puisse plus s'expanser.

## Patentansprüche

1. Werkzeug zur Zentrierung wenigstens einer zu zentrierenden Bohrung (40), die einen Innendurchmesser (D40) aufweist, bezüglich wenigstens einer ersten Bohrung (42.1), die einen Innendurchmesser (D42.1) aufweist, wobei das Zentrierwerkzeug einen Körper (46) umfasst, der wenigstens eine erste Auflagefläche (48.1), die dafür ausgelegt ist, koaxial mit der ersten Bohrung (42.1) zu sein, wenn die erste Auflagefläche (48.1) in der ersten Bohrung (42.1) positioniert ist, und einen Teilabschnitt (50), der dafür ausgelegt ist, in der zu zentrierenden Bohrung (40) positioniert zu werden, aufweist, **dadurch gekennzeichnet, dass** das Zentrierwerkzeug umfasst:
- eine Spiralfeder (56), die um den Teilabschnitt (50) herum positioniert ist und dafür ausgelegt ist, einen nicht ausgedehnten Ruhezustand, in welchem sie einen Anfangsaußendurchmesser (Di) aufweist, und einen ausgedehnten Zustand, in welchem sie einen ausgedehnten Außendurchmesser (De) aufweist, der größer als der Innendurchmesser (D40) der zu zentrierenden Bohrung ist, einzunehmen,
- einen Mechanismus zur radialen Ausdehnung (58), der dafür ausgelegt ist, einen inaktiven Zustand, in welchem er nicht auf die Spiralfeder (56) einwirkt, und einen aktivierten Zustand, in welchem er eine Vergrößerung des Durchmessers der Spiralfeder (56) bewirkt, einzunehmen,
- wobei der Mechanismus zur radialen Ausdehnung (58) dafür ausgelegt ist, die Spiralfeder (56) im ausgedehnten Zustand koaxial mit dem Körper (46) zu halten, und
- wobei der Mechanismus zur radialen Ausdehnung (58) und/oder die Spiralfeder (56) dafür ausgelegt sind, eine radiale Ausdehnung der Spiralfeder (56) zu erzielen, die auf deren gesamter Länge im Wesentlichen identisch ist.

2. Zentrierwerkzeug nach Anspruch 1, **dadurch gekennzeichnet, dass** der Mechanismus zur radialen Ausdehnung (58) wenigstens drei Elemente (60.1, 60.2, 60.3) umfasst, die bezüglich des Körpers (46) radial beweglich zwischen einer zurückgezogenen Position und einer mehr oder weniger ausgefahrenen Position sind und im Wesentlichen gleichmäßig auf dem Umfang des Körpers (46) verteilt sind.

3. Zentrierwerkzeug nach Anspruch 1 oder 2, **dadurch gekennzeichnet, dass** der Mechanismus zur radialen Ausdehnung (58) mehrere Reihen (62, 62') von wenigstens drei radial beweglichen Elementen (60.1, 60.2, 60.3) für jede Reihe (62, 62') umfasst, wobei die drei radial beweglichen Elemente (60.1, 60.2, 60.3) in ein und derselben Querebene angeordnet sind, wobei die Reihen (62, 62') über die Länge der Spiralfeder (56) verteilt sind.

4. Zentrierwerkzeug nach einem der vorhergehenden Ansprüche, **dadurch gekennzeichnet, dass** die Spiralfeder (56) und/oder der Mechanismus zur radialen Ausdehnung (58) dafür ausgelegt sind, die Reibung zwischen ihnen zu verringern.

5. Zentrierwerkzeug nach dem vorhergehenden Anspruch, **dadurch gekennzeichnet, dass** der Mechanismus zur radialen Ausdehnung (58) radial bewegliche Elemente (60.1, 60.2, 60.3) umfasst, welche jeweils einen Kugelanschlag (68) an einem ihrer Enden aufweisen, der sich in Kontakt mit der Spiralfeder (56) befindet.

6. Zentrierwerkzeug nach einem der vorhergehenden Ansprüche, **dadurch gekennzeichnet, dass** das Zentrierwerkzeug ein Steuerelement (70) zum Steuern einer Zustandsänderung des Mechanismus zur radialen Ausdehnung (58) umfasst, das im Inneren des Körpers (46) positioniert ist und in einer Längsrichtung zwischen einer ersten Position, in welcher das Steuerelement (70) nicht auf den Mechanismus zur radialen Ausdehnung (58) einwirkt, und einer zweiten Position, in welcher das Steuerelement (70) einen Übergang des Mechanismus zur radialen Ausdehnung (58) in den aktivierten Zustand bewirkt, beweglich ist.

7. Zentrierwerkzeug nach dem vorhergehenden Anspruch, **dadurch gekennzeichnet, dass** das Steuerelement (70) wenigstens einen Nocken (72), der dafür ausgelegt ist, mit radial beweglichen Elementen (60.1, 60.2, 60.3) des Mechanismus zur radialen Ausdehnung (58) zusammenzuwirken, eine erste Stange (78), die wenigstens teilweise mit einem Gewinde versehen ist, und eine auf die erste Stange (78) aufgeschraubte Mutter (82) umfasst, derart, dass eine Drehung der Mutter (82) bezüglich der ersten Stange (78) in einer ersten Drehrichtung eine Verschiebung des Steuerelements (70) aus der ersten Position zur zweiten Position hin bewirkt.

8. Zentrierwerkzeug nach einem der vorhergehenden Ansprüche, **dadurch gekennzeichnet, dass** der Körper (46) einen Anschlag (52) umfasst, um ihn gegenüber einer Translationsbewegung in Bezug auf die Bohrungen in einer Längsrichtung in einer eingesetzten Position zu blockieren.

9. Zentrierwerkzeug nach einem der vorhergehenden Ansprüche, **dadurch gekennzeichnet, dass** das Zentrierwerkzeug zwei Auflageflächen (48.1, 48.2) umfasst, die beiderseits des Teilabschnitts (50) angeordnet sind.

10. Verfahren zur Zentrierung der Bohrungen (42.1, 42.2, 40) einer Triebwerksaufhängung eines Luftfahrzeugs unter Verwendung eines Zentrierwerkzeugs (44) nach einem der vorhergehenden Ansprüche, **dadurch gekennzeichnet, dass** das Verfahren umfasst:
- einen Schritt des Einsetzens des Zentrierwerkzeugs (44) in die Bohrungen (42.1, 42.2, 40), bis eine eingesetzte Position erreicht ist, wobei die Spiralfeder (56), die sich im Ruhezustand befindet, in einer zu zentrierenden Bohrung (40) positioniert ist und der Mechanismus zur radialen Ausdehnung (58) sich im inaktiven Zustand befindet,
- einen Schritt der Aktivierung des Mechanismus zur radialen Ausdehnung (58), bis sich die Spiralfeder (56) auf ihrem gesamten Umfang in Kontakt mit der zu zentrierenden Bohrung (40) befindet und sich nicht weiter ausdehnen kann.

## Claims

1. Tool for centring at least one bore (40) that is to be centred, having an internal diameter (D40) with respect to at least one first bore (42.1) having an internal diameter (D42.1), the centring tool comprising a body (46) having at least one first span (48.1) that is configured to be coaxial with the first bore (42.1) when the said first span (48.1) is positioned in the first bore (42.1) and a segment (50) that is configured to be positioned in the bore (40) that is to be centred, **characterized in that** the centring tool comprises:
- a coil spring (56) positioned around the segment (50) and configured to occupy a relaxed, non-expanded state in which it has an initial external diameter (Di) and an expanded state in which it has an expanded external diameter (De) that is greater than the internal diameter (D40) of the bore that is to be centred,
- a radial expansion mechanism (58) that is configured to occupy an inactive state in which it does not act on the coil spring (56) and an activated state in which it brings about an increase in the diameter of the coil spring (56),
- the radial expansion mechanism (58) being configured to keep the coil spring (56) coaxial with the body (46) in the expanded state, and
- the radial expansion mechanism (58) and/or the coil spring (56) being configured to obtain a radial expansion of the coil spring (56) that is essentially identical over its entire length.

2. Centring tool according to Claim 1, **characterized in that** the radial expansion mechanism (58) comprises at least three elements (60.1, 60.2, 60.3) that are able to move radially with respect to the body (46), between a retracted position and a more or less extended position, these elements being distributed essentially evenly over the periphery of the body (46) .

3. Centring tool according to Claim 1 or 2, **characterized in that** the radial expansion mechanism (58) comprises multiple sets (62, 62') of at least three radially mobile elements (60.1, 60.2, 60.3) for each set (62, 62'), the three radially mobile elements (60.1, 60.2, 60.3) being arranged in one and the same transverse plane, the sets (62, 62') being distributed over the length of the coil spring (56).

4. Centring tool according to one of the preceding claims, **characterized in that** the coil spring (56) and/or the radial expansion mechanism (58) are configured so as to reduce the friction between them.

5. Centring tool according to the preceding claim, **characterized in that** the radial expansion mechanism (58) comprises radially mobile elements (60.1, 60.2, 60.3) which each comprise at least one ball stop (68) at one of their ends in contact with the coil spring (56) .

6. Centring tool according to one of the preceding claims, **characterized in that** the centring tool comprises a control (70) for controlling a change of state of the radial expansion mechanism (58), this being positioned inside the body (46), able to move in a longitudinal direction between a first position in which the control (70) does not act on the radial expansion mechanism (58) and a second position in which the control (70) causes the radial expansion mechanism (58) to pass to the activated state.

7. Centring tool according to the preceding claim, **characterized in that** the control (70) comprises at least one cam (72) that is configured to cooperate with radially mobile elements (60.1, 60.2, 60.3) of the radial expansion mechanism (58), a first, at least partially threaded rod (78) and a nut (82) screwed onto the first rod (78) such that a rotation of the nut (82), in a first direction of rotation, with respect to the first rod (78) causes the control (70) to move from the first position towards the second position.

8. Centring tool according to one of the preceding claims, **characterized in that** the body (46) comprises a stop (52) to prevent it from moving in translation with respect to the bores, in a longitudinal direction, in an inserted position.

9. Centring tool according to one of the preceding claims, **characterized in that** the centring tool comprises two spans (48.1, 48.2) arranged on either side of the segment (50).

10. Method for centring bores (42.1, 42.2, 40) of an engine attachment of an aircraft using a centring tool (44) according to one of the preceding claims, **characterized in that** the method comprises:
- a step of inserting the centring tool (44) into the bores (42.1, 42.2, 40) until it reaches an inserted position, the coil spring (56) being in the relaxed state positioned in a bore (40) that is to be centred and the radial expansion mechanism (58) being in the inactive state,
- a step of activating the radial expansion mechanism (58) until the coil spring (56) is in contact with the bore (40) that is to be centred over its entire periphery and can expand no further.
